# EUROPÄISCHE PATENTSCHRIFT

(11) **EP 2 144 858 B1**
(45) Veröffentlichungstag und Bekanntmachung des Hinweises auf die Patenterteilung: **25.09.2013**
(21) Anmeldenummer: 08736157.2
(22) Anmeldetag: 11.04.2008
(51) Int. Cl.: C04B 41/86, C09C 1/00

(54) **LASERPIGMENTE FÜR KERAMIKEN**
LASER PIGMENTS FOR CERAMICS
PIGMENTS LASER POUR CÉRAMIQUES

(30) Priorität: 07.05.2007 DE 102007021820
(43) Veröffentlichungstag der Anmeldung: 20.01.2010
(73) Patentinhaber: Chemische Fabrik Budenheim KG, 55257 Budenheim (DE)
(72) Erfinder: LIND, Jörg, 67067 Ludwigshafen (DE); WISSEMBORSKI, Rüdiger, 55435 Gau-Algesheim (DE); KREBS, Melanie, 56288 Braunshorn (DE); KOHLPAINTNER, Christian, 55218 Ingelheim (DE)
(74) Vertreter: WSL Patentanwälte Partnerschaftsgesellschaft
(86) Internationale Anmeldenummer: PCT/EP2008/054448
(87) Internationale Veröffentlichungsnummer: WO 2008/135338

(56) Entgegenhaltungen:
- EP-A- 0 233 146
- DE-A1- 19 517 625
- DE-A1-102004 050 480

## Beschreibung

### Gegenstand der Erfindung

Die vorliegende Erfindung betrifft ein Verfahren und die neue Verwendung von an sich bekannten chemischen Verbindungen für das Erzeugen von ein- oder mehrfarbigen Markierungen, Beschriftungen und/oder Dekoren in Keramik, Steingut, Steinzeug, Irdenware, Porzellan, keramischen Glasuren, Engobe, Glas oder Glasfluß (Emaille) mittels Laserlicht.

### Hintergrund der Erfindung

Die Markierung, Beschriftung oder Dekoration von glasierten Oberflächen auf Keramik, Steingut, Steinzeug, Irdenware, Porzellan etc. erfolgt meist durch den Auftrag weiterer Schichten mittels Siebdruck oder durch das vorherige Aufbringen von Unterglasuren (Unterglasurmalerei) oder Aufglasuren. Solche Schichten müssen in mehreren Prozeßschritten appliziert, eingebrannt und fixiert werden. Bei emaillierten Oberflächen erfolgt die Markierung, Beschriftung oder Dekoration ebenfalls meist durch den Auftrag weiterer Schichten im Siebdruckverfahren oder durch Aufbringen mehrerer Emailschichten übereinander. Auch diese Schichten müssen in mehreren Prozeßschritten eingebrannt und fixiert werden. Die vorgenannten Verfahren sind zwar großtechnisch durchführbar, erfordern aber eine Vielzahl von Arbeitsschritten, sind zeit-, material- und kostenintensiv und benötigen zudem häufig noch die Verwendung weiterer Chemikalien.

Die EP 0 233 146 offenbart ein Verfahren zur Laserbeschriftung von keramischen Materialien, Glasuren, Glaskeramik und Gläsern, bei dem durch Zumischen von strahlungsempfindlichen Zusatzstoffen in die glasartigen Strukturen und durch anschließendes Bestrahlen mittels Laserlicht Farbumschläge erzeugt werden können. Als strahlungsempfindliche Zusatzstoffe werden Zirkonvanadingelb, Praseodymgelb, Zink-Eisen-Chrom-Spinelle, Zirkoneisenrosa, Titandioxid, Titanate, Cadmiumsulfide, Cadmiumsulfoselenide oder solche Verbindungen enthaltende Einschlußpigmente genannt. Ein Nachteil dieser strahlungsempfindlichen Zusatzstoffe ist ihre zum Teil erhebliche Toxizität. Ein weiterer Nachteil bei diesem Verfahren ist, daß man mit den Zusatzstoffen in dem Substratmaterial immer nur eine Farbe erzeugen kann.

Die EP 0 531 584 offenbart ein Verfahren zur Beschriftung oder Dekoration eines Glassubstrates, bei dem man auf das transparente Glas eine Hilfsschicht aufträgt, die wenigsten zwei Arten von Ionen von Übergangselementen enthält, und die Hilfsschicht mittels Laserlicht mit einer Wellenlänge im Bereich von 0,3 µm bis 1,6 µm bestrahlt. Die Laserstrahlung wird in der Hilfsschicht absorbiert, wodurch in der Hilfsschicht ein erhitztes Plasma entsteht, und wirkt dadurch indirekt auf das Substrat ein. Nach der Bearbeitung wird die Hilfsschicht durch Abwaschen oder mechanischen Abtrag entfernt. Zurück bleibt eine Beschriftung oder Dekoration auf dem transparenten Glassubstrat.

Ein ähnliches Verfahren offenbart die EP 0 391 848. Dabei wird auf keramische Materialien, Glasuren, Glaskeramik oder Gläser eine 10 bis 1000 nm dicke transparente Titandioxidschicht aufgebracht und diese anschließend mit einem gepulsten Laser bestrahlt. Dadurch verfärbt sich die Oxidschicht. Ein Nachteil dieses Verfahrens ist, daß die zu bestrahlende Titandioxidschicht nicht fest auf der Oberfläche fixiert ist und deshalb der nicht bestrahlte Teil wieder entfernt werden muß. Außerdem kann mit dem Verfahren lediglich eine grau-schwarze Färbung erzeugt werden.

Die EP 1 023 184 offenbart ein Verfahren, bei dem auf eine Oberfläche aus Glas oder Metall ein Beschriftungsmaterial aufgebracht wird, welches anschließend mittels Laserlicht bestrahlt wird, wobei sich das Beschriftungsmaterial mit der Substratoberfläche verbindet. Das Beschriftungsmaterial enthält einen energieabsorbierenden Verstärker, der vorzugsweise Ruß ist. Ein Nachteil dieses Verfahrens ist, daß die zu bestrahlende Schicht nicht auf der Oberfläche fixiert ist und deshalb der nicht bestrahlte Teil wieder entfernt werden muß. Außerdem kann das Verfahren nur einfarbige Beschriftungen liefern.

Die DE 100 53 771 offenbart ein Verfahren zum Herstellen von farbigen Mustern auf Glas, Keramik oder Metall, bei dem man auf das Substrat einen Überzug aus Farbe, Energieabsorber und Flußmittel aufbringt und den Überzug mit Laserlicht bestrahlt. Hierdurch erzeugt man einen festen Farbauftrag. Es können keine mehrfarbigen Beschriftungen erzeugt werden.

Die DE 198 27 070 beschreibt ein Verfahren zum Bedrucken von emaillierten Oberflächen mittels Tintenflüssigkeit, die anschließend eingebrannt wird. Dieses Verfahren ist zum farbigen Markieren, Dekorieren oder Beschriften von Email sehr aufwendig.

Die DE 35 39 047 beschreibt ein Verfahren zum Dekorieren oder Markieren von emaillierten Oberflächen mittels Laserstrahl unter Verwendung von Trübungsmitteln, die durch die Bestrahlung eine farbliche Veränderung erfahren. Als Trübungsmittel werden Oxide von Titan, Zinn, Cer und Antimon genannt. Auch bei diesem Verfahren können nur einfarbige Beschriftungen erzeugt werden.

### Aufgabe der Erfindung

Die Aufgabe der Erfindung bestand darin, auch mehrfarbige Markierungen, Beschriftungen und/oder Dekore mit guter Haltbarkeit und Beständigkeit in und/oder auf Keramik, Steingut, Steinzeug, Irdenware, Porzellan, keramischen Glasuren, Engobe, Glas oder Glasfluß (Emaille) zu erzeugen.

### Beschreibung der Erfindung

Gelöst wird diese Aufgabe durch die Verwendung und das Verfahren gemäß den anhängenden Patentansprüchen.

Pigmente im Sinne dieser Beschreibung sind Verbindungen oder Mischungen von Verbindungen, die unter dem Einfluß einer Laserlichtquelle an der belichteten Stelle ihre Farbe ändern. Die erfindungsgemäß verwendeten Pigmente sind auf Metallphosphat basierende Verbindungen und Gemische, Mischverbindungen, Mischsalze oder Addukte, welche solche Verbindungen enthalten.

Die erfindungsgemäß bevorzugten Pigmente zur Erzeugung ein- oder mehrfarbiger Markierungen, Beschriftungen und/oder Dekore umfassen reine Metallphosphate, Gemische verschiedener Metallphosphate, Gemische von Metallphosphaten mit anderen Metallverbindungen, Metallphosphate enthaltende Mischverbindungen, Mischsalze oder Addukte. Besonders bevorzugt sind die in den Pigmenten enthaltenen Metalle unter den Metallen der 2., 3. und 4. Hauptgruppe des Periodensystems und/oder unter den Metallen der 1. bis 8. Nebengruppe des Periodensystems ausgewählt. Ganz besonders bevorzugt und geeignet zur Erzeugung ein- oder mehrfarbiger Markierungen, Beschriftungen und/oder Dekore sind phosphatbasierende Verbindungen oder Gemische mit phosphatbasierenden Verbindungen, welche die Metalle Cu, Zn, Sn, Fe, Mn, Ti, Co, Ni und/oder Zr enthalten.

Ganz besonders bevorzugt sind die auf Metallphosphat basierenden Verbindungen ausgewählt unter Kupferhydroxidphosphaten (Cu₃(PO₄)₂ * Cu(OH)₂ = Libethenit; Cu₃(PO₄)₂ * 2Cu(OH)₂], Trikupferphosphat [Cu₃(PO₄)₂], Kupferpyrophosphat [Cu₂P₂O₇], Kupferoxidphosphat [Cu₃(PO₄)₂ * xCuO], Zinnphosphat [Sn₃(PO₄)₂], Mangan(III)-Phosphat, Eisen(II)-Phosphat, Zink-Phosphat [Zn₃(PO₄)₂] sowie Hydratformen und Gemischen davon.

Das überraschend Neue an der Verwendung der erfindungsgemäßen Pigmente ist, daß sich damit durch Bestrahlung mittels Laserlicht in einer Matrix (Keramik, Steingut, Steinzeug, Irdenware, Porzellan, keramischen Glasuren, Engobe, Glas oder Glasfluß) gleichzeitig verschiedene Farben erzeugen lassen, wie beispielsweise Rot, Gelb, Blau, Grün etc., wobei im Sinne dieser Erfindung Schwarz und Weiß als Farben angesehen werden. Nach bisher bekannten Verfahren und mit bekannten Pigmenten ließen sich zwar je nach Verfahren und insbesondere der Auswahl der Pigmente verschiedene Farben erzeugen, jedoch nicht innerhalb der selben Matrix mit dem gleichen Pigment oder der gleichen Pigmentzusammensetzung. Die Erfindung eröffnet damit ein völlig neues Feld der Laserbeschriftung mit weitreichenden Anwendungsmöglichkeiten der mehrfarbigen Gestaltung von Keramik, Steingut, Steinzeug, Irdenware, Porzellan, keramischen Glasuren, Engobe, Glas und Glasfluß, was bisher nur durch mehrschichtige und/oder in mehreren Arbeitsschritten aufgebrachte Glasuren oder durch Siebdruckverfahren möglich war.

Wenn im Zusammenhang mit der vorliegenden Erfindung von mehrfarbigen Markierungen, Beschriftungen und/oder Dekoren die Rede ist, so schließt dies selbstverständlich nicht aus, daß erfindungsgemäß je nach Anwendung und Bedarf auch nur einfarbige Markierungen, Beschriftungen und/oder Dekore aufgebracht werden können, wobei sich auch hier die Erfindung den Vorteil gegenüber bekannten Verfahren hat, daß mit dem gleichen Pigment verschiedene Farben erzeugt werden können. Bekannte Verfahren zur Laserbeschriftung solcher Materialien erlauben für ein bestimmtes Pigment in der Regel nur die Erzeugung einer einzigen Farbe.

Die Erzeugung unterschiedlicher Farben unter Verwendung eines erfindungsgemäßen Pigments erfolgt unter Anwendung von Laserlicht unterschiedlicher Pulsfrequenzen und/oder unterschiedlicher Leistung des aufgebrachten Laserstrahls. In einer bevorzugten Ausführungsform der Erfindung wird die Pulsfrequenz des Lasers zur Erzeugung verschiedener Farben im Bereich von 100 Hz bis 30 kHz variiert. Besonders bevorzugt wird die Pulsfrequenz im Bereich von 300 Hz bis 15 kHz variiert. Gleichzeitig mit oder alternativ zur Variation der Pulsfrequenz des Lasers werden unterschiedliche Farben durch Variieren der Leistung des Laserstrahls erzeugt. In einer bevorzugten Ausführungsform der Erfindung wird die Leistung des Lasers zur Erzeugung verschiedener Farben im Bereich von 0,5 mJ/s bis 15 J/s (1 J/s = 1 Watt) variiert. Besonders bevorzugt liegt die Leistung des Lasers im Bereich von 1,0 mJ/s bis 10 J/s. Es versteht sich, daß die Erfindung nicht auf die vorgenannten Bereiche der Pulsfrequenz und der Leistung des Lasers beschränkt ist. Vielmehr liegt es im Können des Fachmanns, bei Verwendung eines bestimmten erfindungsgemäßen Pigments die Pulsfrequenz und die Leistung eines Lasers durch einfache Versuche so abzustimmen, daß je nach Substrat und Matrixmaterial die gewünschten, unter Anwendung des jeweiligen Pigments möglichen Farben, Farbintensitäten und Helligkeiten erzeugt werden.

Zur Durchführung der vorliegenden Erfindung besonders geeignet ist die Verwendung eines Nd:YAG-Lasers mit einer Wellenlänge von 1064 nm. Alle anderen Arten von Laserlichtquellen mit ausreichender Leistung sind jedoch ebenfalls geeignet, wie z.B. CO₂-Laser (10,6 mm), gepulste UV-Laser, Excimerlaser (F₂-Excimerlaser (157 nm), ArF-Excimerlaser (193 nm), XeCl-Excimerlaser (308 nm), XeF-Excimerlaser (351 nm)) oder Faserlaser unterschiedlicher Wellenlängen (z.B. 1060 nm, 1080 nm, 1500 nm).

Die erfindungsgemäßen Pigmente werden geeigneterweise als feinkörnige Pulver bereitgestellt und in das Matrixmaterial eingearbeitet. In einer bevorzugten Ausführungsform der Erfindung haben die Pigmente eine mittlere Korngröße von 0,15 bis 100 µm und werden in keramische Glasuren, Engobe oder Glasfluß in einer Menge von 1 bis 35 Gew.-% eingebracht. Besonders bevorzugt ist eine Menge von 3 bis 25 Gew.-%, bevorzugter eine Menge von 5 bis 20 Gew.-% und ganz besonders bevorzugt eine Menge von 7 bis 15 Gew.-%.

In einer alternativen bevorzugten Ausführungsform werden die erfindungsgemäßen Pigmente als Pulver mit einer mittleren Korngröße bis 150 nm, vorzugsweise von 10 bis 100 nm, besonders bevorzugt von 15 bis 50 nm bereitgestellt und in das Matrixmaterial eingearbeitet. Pigmente dieser Korngrößen werden im Zusammenhang mit der vorliegenden Anmeldung als "nanofeine" Pigmente bezeichnet. Es hat sich überraschend gezeigt, daß bei Verwendung von nanofeinen Pigmenten je nach Pigment erheblich geringere Mengen erforderlich sein können, um vergleichbare farbliche Effekte zu erzielen wie mit entsprechenden gröberkörnigen Pigmenten. Daher werden nanofeine Pigmente der erfindungsgemäßen Art in keramischen Glasuren, Engobe oder Glasfluß zweckmäßig in einer Menge von 0,1 bis 15 Gew,-%, vorzugsweise in einer Menge von 0,3 bis 10 Gew.-%, bevorzugter in einer Menge von 0,5 bis 8 Gew.-% und besonders bevorzugt in einer Menge von 1 bis 5 Gew.-% eingesetzt.

Keramische Glasuren sind dünne, glasartige Überzüge, welche bei Temperaturen zwischen 800 und 1450°C ausgeschmolzen werden. Es handelt sich um silikathaltige Gläser, die durch unterschiedliche Methoden (z.B. Gießen, Spritzen oder Siebdruck) auf keramische Substrate appliziert werden. Chemisch bestehen Glasuren (wie andere Gläser auch) aus einem Gemisch von Mineralmehlen. Dieses sind zum einen die Netzwerkbildner wie Kieselsäure (z.B. in Form von Quarzmehl) und Netzwerkwandler wie Alkali- und Erdalkalioxide (z. B. Natrium- und Calciumoxid in Form von Feldspat oder Kreide). Keramische Glasuren enthalten neben Glasbildnern und keramischen Fritten auch andere Zusätze wie z.B. Zinkoxid, Titandioxid, Aluminiumoxid, Tone, Feldspäte, Kaoline, Kreiden, Strontiumoxide, Bariumoxide, Lithiumoxide, Farboxide oder Pigmente, welche die Eigenschaften der jeweiligen Glasur bestimmen. Keramische Glasuren werden in einem oder mehreren Schritten auf keramische Substrate wie Irdenware, Steingut, Steinzeug oder Porzellan aufgebracht. Das Ziel ist es, mittels der Glasuren poröse keramische Substrate dicht zu machen, die jeweilige Oberfläche gegen chemische und physikalische Angriffe zu schützen und durch die Verwendung von Pigmenten zu dekorieren. Zum Beispiel verbessert die Glasur auf Geschirren die Oberflächenrauhigkeit (bessere Reinigung) und Ritzhärte. Auf Hochspannungsisolatoren aus Elektroporzellan dient sie dazu, zum einen durch eine immanente Druckspannung die Festigkeit des Isolators zu erhöhen, und zum anderen dazu, durch eine geeignete chemische Zusammensetzung die Oberflächenleitfähigkeit und somit den Kriechstrom zu reduzieren.

Eine Engobe (auch als Begußmasse oder Angußmasse bezeichnet) ist ein dünnflüssiger Tonschlicker, der zur Einfärbung keramischer Produkte dient. Die Engobe wird nach dem Einbrennen üblicherweise mit einer transparenten keramischen Glasur überzogen, die ebenfalls eingebrannt wird. Als Sinterengobe wird eine Kombination aus färbenden und glasierenden Elementen (Metalloxide oder Farbkörper) bezeichnet, sie ist Engobe und Glasur in einem und hat eine leicht glänzende Oberfläche.

Bei Email handelt es sich um silikathaltige Gläser, die durch unterschiedliche Methoden (Gießen oder Spritzen) auf metallische Substrate appliziert werden. Emailgläser enthalten neben den Glasbildnern, sogenannte Emailfritten und andere Zusätze, wie z.B. Zinkoxid, Titandioxid, Aluminiumoxid, Tone, Feldspäte, Kaoline, Kreiden, Strontiumoxide, Bariumoxide, Lithiumoxide etc. Emailgläser werden auf metallische Substrate oder Glas appliziert und bei Temperaturen zwischen 800 und 1200°C eingebrannt mit dem Ziel, die jeweilige Oberfläche gegen chemische und physikalische Angriffe zu schützen und durch die Verwendung von Pigmenten zu dekorieren.

Mit dem erfindungsgemäßen Verfahren lassen sich mit Vorteil ein- oder mehrfarbige Markierungen, Beschriftungen oder Dekore in den Oberflächen von Keramik, Steingut, Steinzeug, Irdenware, Porzellan, keramischen Glasuren, Engobe, Glas oder Glasfluß (Emaille) auf sehr einfache und kostengünstige Weise erzeugen. Ganz besonders vorteilhaft ist die Verwendung der erfindungsgemäßen Pigmente in einer Unterglasur, die als Engobe ausgelegt ist, und über die eine transparente Glasur appliziert und eingebrannt wird. Mit dem Laserstrahl erzeugt man durch die transparente Glasur hindurch Markierungen, Beschriftungen oder Dekore in verschiedenen Farben, ohne daß dabei die Oberfläche angegriffen wird. Durch die Glasur über der Engobe bleibt letztere fixiert und die durch Laserbestrahlung gefärbten Bereiche gegen äußere (z.B. chemische oder physikalische) Angriffe geschützt.

Ein wesentlicher Vorteil der erfindungsgemäßen Pigmente besteht darin, daß diese in keramische Materialien, keramische Glasuren, Emailgläser etc. eingearbeitet und zusammen mit diesen bei den erforderlichen Brenntemperaturen gebrannt oder ausgeschmolzen werden können, ohne daß die Pigmente ihre Fähigkeit zur Farbmarkierung mittels Laserlicht dabei verlieren. Eine Nachbearbeitung nach dem Markieren mittels Laserlicht ist nicht erforderlich. Die Markierung bleibt über lange Zeit stabil und Farbecht, insbesondere wenn die Pigmente in eine Engobe eingearbeitet und mit einer schützenden transparenten Glasur überzogen sind.

Im Folgenden werden einige erfindungsgemäß geeignete Verfahren näher beschrieben.

### Einschichtiges Glasurverfahren

Beim einschichtigen Glasurverfahren werden erfindungsgemäße phosphatbasierende Pigmente in Pulverform zu einem keramischen Glasurpulver zudosiert und gemischt. Das Gemisch wird dann mit Wasser aufgeschlämmt und mittels einer Spritzpistole oder von Hand auf ein Substrat aufgetragen. Das Substrat kann aus Irdenware, Steingut, Steinzeug, Porzellan oder einem anderen geeigneten Material bestehen. Nach der Applikation der mit dem Pigment angereicherten Glasuren erfolgt eine Trocknung und im Anschluß ein Einbrennen der Glasur zwischen 800°C und 1450°C. Dabei schmilzt das Glas aus und bildet einen Überzug, der beim Abkühlen erstarrt und bei Raumtemperatur dann eine feste glasige Struktur bildet.

Im Anschluß daran wird das in einem Durchgang glasierte und gebrannte keramische Substrat, welches das Pigment in der Glasur enthält, z.B. mit einem Nd-YAG Laser mit einer Wellenlänge von 1064 nm und ggf. unter Variation der Pulsfrequenz und/oder der Leistung unter Erzeugung einer Markierung, einer Beschriftung oder eines Dekors bestrahlt.

### Zweischichtiges Glasurverfahren

Beim zweischichtigen Glasurverfahren werden erfindungsgemäße phosphatbasierende Pigmente in Pulverform zu einem keramischen Engobepulver zudosiert und gemischt. Das Gemisch wird dann mit Wasser aufgeschlämmt und mittels einer Spritzpistole oder von Hand auf ein Substrat aufgetragen. Das Substrat kann aus Irdenware, Steingut, Steinzeug, Porzellan oder einem anderen geeigneten Material bestehen. Nach der Applikation der Engobe erfolgt eine Trocknung und im Anschluß ein Einbrennen der Engobe zwischen 600°C und 1200°C. Dabei sintert die Engobe, und nach dem Abkühlen bildet sich eine fest auf dem keramischen Substrat fixierte Schicht, die das phosphatbasierende Pigment enthält. Im Anschluß daran wird über der Engobe eine transparente keramische Glasur als wäßrige Aufschlämmung aufgebracht, getrocknet und bei Temperaturen zwischen 800°C und 1450°C eingebrannt. Dabei schmilzt das Glas aus und bildet einen Überzug, der beim Abkühlen erstarrt und bei Raumtemperatur dann eine feste glasige Struktur bildet.

Im Anschluß daran wird das in zwei Durchgängen glasierte und gebrannte keramische Substrat, welches das Pigment in der Engobe enthält, z.B. mit einem Nd-YAG Laser mit einer Wellenlänge von 1064 nm und ggf. unter Variation der Pulsfrequenz und/oder der Leistung unter Erzeugung einer Markierung, einer Beschriftung oder eines Dekors bestrahlt.

### Einschichtiges Emaillierverfahren

Beim einschichtigen Emaillierverfahren werden erfindungsgemäße phosphatbasierende Pigmente in Pulverform zu einem Emailpulver oder -granulat zudosiert und gemischt. Das Gemisch wird dann mit Wasser aufgeschlämmt und im Spritz- oder Tauchverfahren auf ein Substrat aufgetragen. Das Substrat ist in der Regel ein Metall, z. B. Stahlblech, Gusseisen, Aluminium, es kann aber auch Glas oder ein anderes für das emaillieren geeignetes Material sein. Nach der Applikation des mit dem Pigment angereicherten Emails erfolgt eine Trocknung und im Anschluß ein Einbrennen zwischen 650°C und 1200°C. Dabei schmilzt das Email aus und bildet einen Überzug, der beim Abkühlen erstarrt und bei Raumtemperatur eine feste glasige Struktur bildet.

Im Anschluß daran wird das in einem Durchgang emaillierte und gebrannte Substrat, welches das Pigment in der Emailschicht enthält, z.B. mit einem Nd-YAG Laser mit einer Wellenlänge von 1064 nm und ggf. unter Variation der Pulsfrequenz und/oder der Leistung unter Erzeugung einer Markierung, einer Beschriftung oder eines Dekors bestrahlt.

### Farben

Die durch das erfindungsgemäße Verfahren herstellbaren Farben werden hierin durch das L*a*b*-Farbsystem angegeben. Das L*a*b*-Farbsystem wurde 1976 von der CIE-Kommission aus dem CIE-XYZ-Modell entwickelt. Es ist standardisiert, gleichabständig, geräteunabhängig und baut auf der menschlichen Wahrnehmung auf. Es basiert auf dem XYZ-Farbsystem, doch wird die Helligkeit getrennt von den Farbtönen auf einer eigenen Achse aufgetragen. Im Vergleich zur CIE-Normfarbtafel erscheinen im a*- und b*-System die Grüntöne stark eingeengt, während der Purpur-Blau-Cyanbereich stark gestreckt ist.

Der Farbraum des L*a*b*-Systems ist wie folgt angeordnet:

Die a- und die b-Achse bilden eine Ebene. Die Skala beider Achsen umfasst einen Bereich von -128 bis +127. Auf der a*-Achse liegen alle Grün- und Rottöne. Hierbei repräsentieren negative a-Werte grüne und positive a-Werte rote Farben. Auf der b-Achse befinden sich im negativen Bereich alle Blau- und im positiven Bereich alle Gelbtöne. Diese Anordnung ist auf die Gegenfarbtheorie von Ewald Hering zurückzuführen. Sie besagt, dass das menschliche Farbsehen aus vier Grundfarben mit den zwei Gegensatzpaaren Blau-Gelb und Rot-Grün beruht. Farborte, die auf derselben Kreislinie um die L*-Achse liegen, besitzen die gleiche Buntheit C* (Chroma), und Farborte, die auf demselben Radiusstrahl liegen, haben den gleichen Farb- oder Buntton h (Hue). Reiht man alle Farbtöne aneinander, erhält man einen Farbenkreis.

Vertikal zur a- und b-Ebene verläuft die Helligkeitsachse (L: Luminance). Ein L- Wert von 0 erzeugt Schwarz und ein L-Wert von 100 Weiß. Die Farben sind für den Menschen nur in einem farbspezifisch unterschiedlichen Bereich wahmehmbar. So kann sichtbares Gelb b*-Werte von über 100 erreichen, Blau hingegen nur b*-Werte um -50. Daher ergibt sich eine sehr unregelmäßige Form des Farbraums, die durch die übliche Darstellungsweise als Zylinder oder Kugel nur stark vereinfacht wiedergegeben wird.

### Beispiele

### Methoden

### 1. Herstellung einer einschichtigen keramischen Glasur

Eine pulverförmige keramische Steinzeugglasur der Zusammensetzung 64,2 Gew.-% SiO₂, 9,8 Gew.-% Al₂O₃, 6,3 Gew.-% CaO, 3,8 Gew.-% BaO, 2,9 Gew.-% K₂O, 8,0 Gew.-% ZnO, 2,1 Gew.-% MgO und 2,0 Gew.-% Na₂O wurde mit der gewünschten Menge an Pigment gemischt und die Mischung anschließend in Wasser aufgeschlämmt. Die so hergestellte Aufschlämmung wurde mit einer Spritzpistole auf eine keramische säurefeste Steinzeugfliese aufgetragen und für 1 bis 4 Stunden bei 110°C getrocknet. Anschließend erfolgte der keramische Brand der glasierten Steinzeugfliese bei 1220°C, wobei zunächst innerhalb einer Stunde von Raumtemperatur auf 550°C, danach innerhalb einer Stunde von 550°C auf 750°C und schließlich innerhalb einer Stunde von 750°C auf 1220°C aufgeheizt wurde. Die Temperatur von 1220°C wurde für zwei Stunden gehalten. Anschließend wurde die Fliese auf Raumtemperatur abkühlen gelassen. Nach dem Abkühlen wurde die fertige keramische Fliese mittels eines Nd-YAG-Lasers mit einer Wellenlänge von 1064 nm markiert, wobei verschiedene Markierungen mit unterschiedlichen Pulsfrequenzen und Leistungen des Lasers aufgebracht wurden.

### 2. Herstellung einer zweischichtigen keramischen Glasur mit Engobe und darüber aufgebrachter transparenter keramischer Glasur

Eine pulverförmige keramische Engobe auf Basis eines plastischen Tones, eines Kaolins und einer keramischen Glasurfritte der Zusammensetzung 64,2 Gew.-% SiO₂, 9,8 Gew.-% Al₂O₃, 6,3 Gew.-% CaO, 3,8 Gew.-% BaO, 2,9 Gew.-% K₂O, 8,0 Gew.-% ZnO, 2,1 Gew.-% MgO und 2,0 Gew.-% Na₂O wurde mit der gewünschten Menge Pigment gemischt und anschließend mit Wasser aufgeschlämmt. Die so hergestellte Aufschlämmung wurde mittels einer Spritzpistole auf eine keramische Säurefeste Steinzeugfliese aufgetragen und für 24 Stunden bei 110°C getrocknet. Danach erfolgte das Einbrennen der Engobe bei 900°C, wobei innerhalb von zwei Stunden von Raumtemperatur auf 350°C und anschließend mit voller Leistung auf 900°C aufgeheizt wurde. Die Temperatur von 900°C wurde dann für 30 Minuten gehalten.

Nach dem Abkühlen der Fliese wurde eine in Wasser suspendierte Steinzeugglasur mittels einer Spritzpistole aufgetragen. Danach erfolgte der keramische Brand bei 1220°C, wobei zunächst innerhalb einer Stunde von Raumtemperatur auf 550°C, danach innerhalb einer weiteren Stunde von 550°C auf 750°C und anschließend innerhalb einer weiteren Stunde von 750°C auf 1220°C aufgeheizt wurde. Die Temperatur von 1220°C wurde für zwei Stunden gehalten. Anschließend wurde die Fliese auf Raumtemperatur abkühlen gelassen.

Durch dieses Verfahren wurden zwei auf dem keramischen Substrat eingebrannte Schichten hergestellt, von denen die untere das laseraktivierbare Pigment enthielt und die obere als transparente Deckschicht diente.

Nach dem Abkühlen wurde das fertige keramische Substrat mittels eines Nd-YAG-Lasers bei einer Wellenlänge von 1064 nm markiert, wobei verschiedene Markierungen mit unterschiedlicher Pulsfrequenz und Leistung des Lasers aufgebracht wurden.

Der Vorteil dieses Verfahrens besteht darin, daß das Laserlicht die transparente Glasur durchdringt und in der Engobe eine ein- oder mehrfarbige Markierung erzeugt, die durch die darüberliegende transparente Glasur geschützt ist und fixiert bleibt.

### 3. Herstellung einer Emailleschicht

Ein Emaillegranulat auf Basis einer ungemahlenen Glasfritte der Zusammensetzung 51,7 Gew.- % SiO₂, 4,8 Gew.-% Al₂O₃, 8,2 Gew.-% K₂O, 1,6 Gew.-% ZnO, 11 Gew.-% Na₂O, 3,4 Gew.-% P₂O₅ und 19,1 Gew.-% TiO₂, eines Bindetones, Kaliumhydroxid, Natriumaluminat und Natriumnitrid wurde mit einer gewünschten Menge des erfindungsgemäßen Pigments gemischt. Anschließend wurde das Gemisch in einer Glasurschwingmühle unter Zugabe von Wasser vermahlen. Die so hergestellte feinteilige Aufschlämmung wurde mittels einer Spritzpistole auf ein gereinigtes Metallblech aufgetragen und anschließend für 5 Minuten bei 110°C getrocknet. Danach erfolgte das Einbrennen der Emailleschicht in einem Durchgang bei 820°C für 4 Minuten in einem bereits auf diese Temperatur aufgeheizten Ofen.

Nach dem Abkühlen wurde das emaillierte Blech mittels eines Nd-YAG-Lasers mit einer Wellenlänge von 1064 nm markiert, wobei für verschiedene Markierungen unterschiedliche Pulsfrequenzen und Leistungen des Lasers angewendet wurden.

### 4. Lasermarkierung

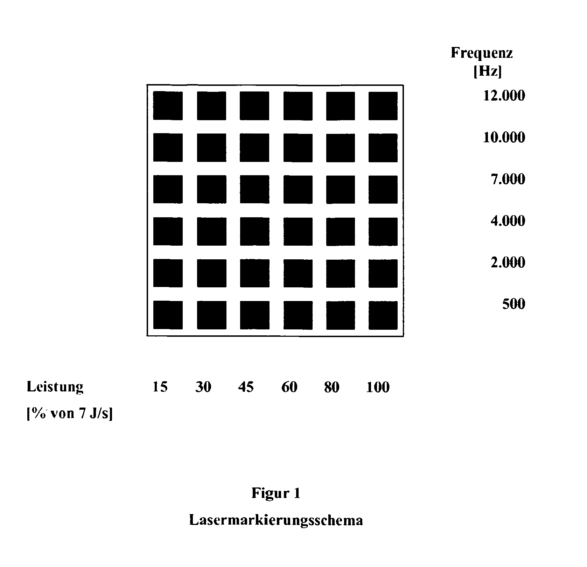

Die Markierung der Substrate wurde in einer DPL Genesis Marker (ACI Lasercomponets GmbH) und unter Verwendung der Magic Mark Lasermarkingsoftware (ACI Lasercomponents GmbH) durchgeführt. Auf jedem Substrat wurden 6x6 quadratische Markierungen aufgebracht, wobei jeweils 6 Markierungen mit 15%, 30%, 45%, 60%, 80% bzw. 100% der Laserleistung von 7 J/s (Watt) ausgeführt wurden. Innerhalb der 6 mit der gleichen Laserleistung hergestellten Markierungen wurde jede Markierung mit einer anderen Pulsfrequenz des Lasers von 500 Hz, 2000 Hz, 4000 Hz, 7000 Hz, 10000 Hz und 12000 Hz ausgeführt. Das Markierungsschema ist in Figur 1 wiedergegeben. Die Geschwindigkeit des Laserstrahls auf dem Substrat wurde für dasselbe Substrat jeweils konstant gehalten, konnte für verschiedene Substrate aber variiert werden und lag im Bereich von 10 mm/s bis 100 mm/s.

### 5. Charakterisierung der Proben

Die Morphologie der markierten Oberflächen wurde mittels eines optischen Mikroskops (Praktica 5 MP Luxmedia 5203; Leica) bei 10-facher Vergrößerung untersucht.

Die Eindringtiefe der Lasermarkierungen in das Material wurde mit einem Elektronenmikroskop (Personal SEM; RJ Lee Instruments) bestimmt. Hierfür wurden die markierten Keramikfliesen mittels einer wassergekühlten Diamantsäge zerteilt, getrocknet und anschließend im Querschnitt untersucht.

Die chemische Zusammensetzung der markierten Bereiche wurde vor und nach der Laserbehandlung mittels Röntgenphotoelektronenspektroskopie (XPS; LH 10 ESCA; Leybold-Heraeus) untersucht. Hierzu wurde Al K_{α̇}- Strahlung verwendet.

Für die Bestimmung der erzeugten Farben wurde ein GretagMacbeth Color-eye Spektrophotometer 2180/2180 UV mit D 65-Beleuchtung verwendet und das oben beschriebene L*a*b*-Farbsystem angewendet.

Zur Untersuchung der Farbbeständigkeit wurden die Proben in 1% HCl-Lösung bzw. 1% NaOH-Lösung für 30 Minuten eingetaucht und eventuelle Farbveränderungen festgehalten.

### Beispiel A - Einschichtige keramische Glasur

Nach dem oben beschrieben Verfahren wurden keramische Kacheln mit einer einschichtigen keramischen Glasur mit erfindungsgemäßem Pigment hergestellt und nach dem ebenfalls oben beschriebenen Schema markiert. Als Kontrolle wurde eine Glasur ohne Pigment eingesetzt. Die eingesetzten Pigmente sind in der nachfolgenden Tabelle 1 wiedergegeben.

**Tabelle 1 - Einschichtige keramische Glasuren**

| **Bsp. Nummer** | **Pigment** | **Gew.-%** |
|---|---|---|
| A1 | Kupferhydroxidphosphat (66,5% CuO, 30% P₂O₅, Rest H₂O) | 10% |
| A2 | Kupferpyrophosphat + Zinnphosphat (55% CuO, 30% P₂O₅, 15% SnO) | 5% |
| A3 | Kupferoxidphosphat (69% CuO, 31% P₂O₅) | 10% |

### Farbanalyse

An einigen farblich intensiven ausgewählten Markierungen wurden Farbanalysen in der oben beschriebenen Art und Weise durchgeführt. Die Ergebnisse sind in der nachfolgenden Tabelle 2 wiedergegeben. Mit "Standard" ist jeweils die Farbanalyse an einem nicht mit Laserlicht bestrahlten Bereich der Probe bezeichnet.

**Tabelle 2 - Farbanalyse der einschichtigen keramischen Glasuren**

| **Bsp. Nummer** | **Pulsfrequ. /** % **von 7 J/s** | **Farbe** | **L*** | **a*** | **b*** |
|---|---|---|---|---|---|
| A1 | --- | Standard | 46,8 | -7,2 | 6,2 |
| A1 | 12000 Hz 30 % | Grün | 42,1 | -2,4 | 1,7 |
| A1 | 12000 Hz 100 % | Rot | 36,6 | 9,7 | 6,9 |
| A1 | 7000 Hz 100 % | Gelb | 51,0 | -0,5 | 14,3 |
| A2 | --- | Standard | 61,5 | -12,4 | 0,3 |
| A2 | 12000 Hz 80 % | Grün | 53,4 | -8,6 | 4,0 |
| A2 | 10000 Hz 100 % | Silber-Weiß | 64,9 | -5,6 | 6,1 |
| A2 | 12000 Hz 100% | Rot | 56,7 | -0,3 | 4,3 |
| A2 | 4000 Hz 100 % | Braun | 39,7 | 2,6 | 8,4 |
| A3 | --- | Standard | 46,0 | -6,4 | 6,2 |
| A3 | 500 Hz 45 % | Grün | 46,0 | -3,1 | 2,5 |
| A3 | 7000 Hz 100 % | Rot | 39,3 | 11,5 | 8,9 |

### Beispiel B - Email

Nach dem oben beschrieben Verfahren wurden Metallbleche mit einer Emailschicht mit erfindungsgemäßem Pigment hergestellt und nach dem ebenfalls oben beschriebenen Schema markiert. Als Kontrolle wurde eine Glasur ohne Pigment eingesetzt. Die eingesetzten Pigmente sind in der nachfolgenden Tabelle 3 wiedergegeben.

**Tabelle 3 - Email**

| **Bsp. Nummer** | **Pigment** | **Gew.-%** |
|---|---|---|
| B1 | Kupferhydroxidphosphat (66,5% CuO, 30% P₂O₅, Rest H₂O) | 10% |
| B2 | Nanofeines Kupferhydroxidphosphat (Zusammens. wie B1-A4; 20-40 nm) | 1% |
| B3 | Kupferoxidphosphat (69% CuO, 31% P₂O₅) | 10% |

### Farbanalyse

An einigen farblich intensiven ausgewählten Markierungen wurden Farbanalysen in der oben beschriebenen Art und Weise durchgeführt. Die Ergebnisse sind in der nachfolgenden Tabelle 4 wiedergegeben. Mit "Standard" ist jeweils die Farbanalyse an einem nicht mit Laserlicht bestrahlten Bereich der Probe bezeichnet.

**Tabelle 4 - Farbanalyse Email**

| **Bsp. Nummer** | **Pulsfrequ. / % von 7 J/s** | **Farbe** | **L*** | **a*** | **b*** |
|---|---|---|---|---|---|
| B1 | --- | Standard | 76,3 | -13,3 | 2,2 |
| B1 | 4000Hz 100 % | Gold-Braun | 45,1 | 4,1 | 24,6 |
| B1 | 12000 Hz 80% | Hellbraun | 71,9 | -9,3 | 9,0 |
| B2 | --- | Standard | 90,5 | -4,6 | 2,3 |
| B2 | 7000 Hz 100 % | Rot | 70,1 | 2,1 | 11,3 |
| B2 | 10000 Hz 100% | Gelb | 87,9 | -5,6 | 4,6 |
| B2 | 4000 Hz 100 % | Schwarz | 37,6 | 1,9 | 10,1 |
| B3 | - | Standard | 75,0 | -14,8 | 5,1 |
| B3 | 12000 Hz 100 % | Dunkelbraun | 34,1 | 9,4 | 15,9 |
| B3 | 12000 Hz 60 % | Gold-Braun | 41,3 | 6,2 | 22,7 |
| B3 | 7000 Hz 60% | Gelb | 65,9 | -9,8 | 19,7 |

Mit den erfindungsgemäßen Pigmenten konnten innerhalb des gleichen Substrates und mit dem gleichen Pigment bei unterschiedlichen Pulsfrequenzen und Leistungen des Lasers unterschiedliche Farben erzeugt werden. Die Hauptfarben waren Grün, Rot, Gelb, Blau und Braun, wobei je nach Pulsfrequenz und Laserleistung Helligkeits- und Farbabstufungen dieser Hauptfarben erhalten wurde.

## Patentansprüche

1. Verwendung von auf Metallphosphat basierenden Verbindungen und Gemischen, Mischverbindungen, Mischsalzen oder Addukten, welche solche Verbindungen enthalten, als Pigmente für das Erzeugen von ein- oder mehrfarbigen Markierungen, Beschriftungen und/oder Dekoren mittels Laserlicht in Keramik, Steingut, Steinzeug, Irdenware, Porzellan, keramischen Glasuren, Engobe, Glas oder Glasfluß (Emaille), in welche die Pigmente eingebracht sind.

2. Verwendung nach Anspruch 1, **dadurch gekennzeichnet, daß** die Pigmente reine Metallphosphate, Gemische verschiedener Metallphosphate, Gemische von Metallphosphaten mit anderen Metallverbindungen und Metallphosphate enthaltende Mischverbindungen, Mischsalze oder Addukte umfassen.

3. Verwendung nach einem der vorausgegangenen Ansprüche **dadurch gekennzeichnet, daß** die in den Pigmenten enthaltenen Metalle unter den Metallen der 2., 3. und 4. Hauptgruppe des Periodensystems und/oder unter den Metallen der 1. bis 8. Nebengruppe des Periodensystems ausgewählt sind.

4. Verwendung nach einem der vorausgegangenen Ansprüche **dadurch gekennzeichnet, daß** die in den Pigmenten enthaltenen Metalle unter Cu, Zn, Sn, Fe, Mn, Ti, Co, Ni, Zr ausgewählt sind.

5. Verwendung nach einem der vorausgegangenen Ansprüche **dadurch gekennzeichnet, daß** die auf Metallphosphat basierenden Verbindungen ausgewählt sind unter Kupferhydroxidphosphaten [Cu₃(PO₄)₂ * Cu(OH)₂ = Libethenit; Cu₃(PO₄)₂ * 2Cu(OH)₂], Kupferhydroxidphosphat enthaltenden Mineralien, Trikupferphosphat [Cu₃(PO₄)₁], Kupferpyrophosphat [Cu₂P₂O₇], Kupferoxidphosphat [Cu₃(PO₄)₂ * xCuO], Zinnphosphat [Sn₃(PO₄)₂], Mangan(III)-Phosphat, Eisen(II)-Phosphat, Zink-Phosphat [Zn₃(PO₄)₂] sowie Hydratformen und Gemischen davon.

6. Verwendung nach einem der vorausgegangenen Ansprüche **dadurch gekennzeichnet, daß** man für das Erzeugen von unterschiedlichen Farben der Markierungen, Beschriftungen und/oder Dekoren die Pigmente mit Laserlicht unterschiedlicher Pulsfrequenzen und/oder unterschiedlicher Leistung bestrahlt.

7. Verwendung nach einem der vorausgegangenen Ansprüche **dadurch gekennzeichnet, daß** die Pigmente eine mittlere Korngröße von 0,15 bis 100 µm aufweisen und in keramische Glasuren, Engobe oder Glasfluß in einer Menge von 1 bis 35 Gew,-% eingebracht werden, vorzugsweise in einer Menge von 3 bis 25 Gew.-%, bevorzugter in einer Menge von 5 bis 20 Gew.-%, besonders bevorzugt in einer Menge von 7 bis 15 Gew.-%.

8. Verwendung nach einem der vorausgegangenen Ansprüche **dadurch gekennzeichnet, daß** die Pigmente eine mittlere Korngröße bis 150 nm, vorzugsweise von 10 bis 100 nm, besonders bevorzugt von 15 bis 50 nm aufweisen und in keramische Glasuren, Engobe oder Glasfluß in einer Menge von 0,1 bis 15 Gew,-% eingebracht werden, vorzugsweise in einer Menge von 0,3 bis 10 Gew.-%, bevorzugter in einer Menge von 0,5 bis 8 Gew.- %, besonders bevorzugt in einer Menge von 1 bis 5 Gew.-%.

9. Verfahren für das Erzeugen von ein- oder mehrfarbigen Markierungen, Beschriftungen und/oder Dekoren in Keramik, Steingut, Steinzeug, Irdenware, Porzellan, keramischen Glasuren, Engobe, Glas oder Glasfluß (Emaille), bei dem man auf Metallphosphat basierende Verbindungen und Gemische, Mischverbindungen, Mischsalze oder Addukte, welche solche Verbindungen enthalten, als Pigmente in das Material einbringt und das Material mittels Laserlicht bestrahlt.

10. Mit ein- oder mehrfarbigen Markierungen, Beschriftungen und/oder Dekoren versehene(s) Keramik, Steingut, Steinzeug, Irdenware, Porzellan, keramische Glasuren, Engobe, Glas oder Glasfluß (Emaille), hergestellt nach dem Verfahren gemäß Anspruch 9.

## Claims

1. Use of metal phosphate-based compounds and mixtures, mixed compounds, mixed salts or adducts containing such compounds, as pigments for the production of single-colored or multi-colored markings, inscriptions and/or decorations by means of laser light in ceramic, stoneware, pottery, earthenware, porcelain, ceramic glazes, engobe, glass or glass paste (enamel) in which the pigments are added.

2. Use according to claim 1, **characterized in that** the pigments include pure metal phosphates, mixtures of various metal phosphates, mixtures of metal phosphates with other metal compounds and mixed compounds, mixed salts or adducts containing metal phosphates.

3. Use according to one of the preceding claims, **characterized in that** the metals contained in the pigments are selected from metals of the 2nd, 3rd and 4th main groups of the periodic system and/or the metals of the 1st to 8th secondary groups of the periodic system.

4. Use according to one of the preceding claims, **characterized in that** the metals contained in the pigments are selected from Cu, Zn, Sn, Fe, Mn, Ti, Co, Ni and Zr.

5. Use according to one of the preceding claims, **characterized in that** the compounds based on metal phosphate are selected from copper hydroxy phosphates [Cu₃(PO₄)₂ * Cu(OH)₂ = libenthenite; Cu₃(PO₄)₂ * 2Cu(OH)₂], minerals containing copper hydroxy phosphate, tricopper phosphate [Cu₃(PO₄)₂], copper pyrophosphate [Cu₂P₂O₇], copper oxide phosphate [Cu₃(PO₄)₂ * xCuO], tin phosphate [Sn₃(PO₄)₂], manganese(III)-phosphate, iron(II)-phosphate, zinc phosphate [Zn₃(PO₄)₂] as well as hydrate forms and mixtures thereof.

6. Use according to one of the preceding claims, **characterized in that** the pigments are irradiated with laser light of differing pulse frequencies and/or differing power for the production of different colors of the markings, inscriptions and/or decorations.

7. Use according to one of the preceding claims, **characterized in that** the pigments have a mean grain size of 0.15 to 100 µm and are introduced into ceramic glazes, engobe or glass paste in an amount of from 1 to 35 % by weight, preferably in an amount of from 3 to 25 % by weight, more preferably in an amount of from 5 to 20 % by weight, particularly preferably in an amount of from 7 to 15 % by weight.

8. Use according to one of the preceding claims, **characterized in that** the pigments have a mean grain size of up to 150 nm, preferably from 10 to 100 nm, particularly preferably from 15 to 50 nm, and are introduced into ceramic glazes, engobe or glass paste in an amount of from 0.1 to 15 % by weight, preferably in an amount of from 0.3 to 10 % by weight, more preferably in an amount of from 0.5 to 8 % by weight, particularly preferably in an amount of from 1 to 5 % by weight.

9. A method of manufacturing single-colored or multi-colored markings, inscriptions and/or decorations in ceramic, stoneware, pottery, earthenware, porcelain, ceramic glazes, engobe, glass or glass paste (enamel), wherein metal phosphate-based compounds and mixtures, mixed compounds, mixed salts or adducts which contain such compounds are introduced as pigments into the material and the material is irradiated by means of laser light.

10. Ceramic, stoneware, pottery, earthenware, porcelain, ceramic glazes, engobe, glass or glass paste (enamel) provided with single-colored or multi-colored markings, inscriptions and/or decorations, produced by the method according to claim 9.

## Revendications

1. Utilisation de composés à base de phosphates métalliques et de mélanges, composés mixtes, sels mixtes ou produits d'addition qui contiennent de tels composés, comme pigments pour la production de marquages, inscriptions et/ou décors, monochromes ou polychromes, au moyen d'une lumière laser, dans de la céramique, de la faïence, du grès, de la poterie, de la porcelaine, des glaçures céramiques, de l'engobe, du verre ou des produits vitreux (émaux), dans lesquels les pigments sont incorporés.

2. Utilisation selon la revendication 1, **caractérisée en ce que** les pigments comprennent des phosphates métalliques purs, des mélanges de différents phosphates métalliques, des mélanges de phosphates métalliques et d'autres composés métalliques, et des composés mixtes, sels mixtes et produits d'addition contenant des phosphates métalliques.

3. Utilisation selon l'une des revendications précédentes, **caractérisée en ce que** les métaux contenus dans les pigments sont choisis parmi les métaux des groupes principaux 2, 3 et 4 de la classification périodique et/ou parmi les métaux des groupes secondaires 1 à 8 de la classification périodique.

4. Utilisation selon l'une des revendications précédentes, **caractérisée en ce que** les métaux contenus dans les pigments sont choisis parmi Cu, Zn, Sn, Fe, Mn, Ti, Co, Ni, Zr.

5. Utilisation selon l'une des revendications précédentes, **caractérisée en ce que** les composés à base de phosphates métalliques sont choisis parmi les hydroxyphosphates de cuivre [Cu₃(PO₄)₂*Cu(OH)₂= libéthénite ; Cu₃(PO₄)₂*2Cu(OH)₂], les minéraux contenant un hydroxyphosphate de cuivre, le triphosphate de cuivre [Cu₃(PO₄)₂], le pyrophosphate de cuivre [Cu₂P₂O₇], l'oxyphosphate de cuivre [Cu₃(PO₄)₂]*xCuO], le phosphate d'étain [Sn₃(PO₄)₂], le phosphate de manganèse (III), le phosphate de fer (II), le phosphate de zinc [Zn₃(PO₄)₂], ainsi que des formes hydratées et leurs mélanges.

6. Utilisation selon l'une des revendications précédentes, **caractérisée en ce que**, pour la production de différentes couleurs de marquages, inscriptions et/ou décors, les pigments sont irradiés avec une lumière laser ayant différentes fréquences d'impulsions et/ou différentes puissances.

7. Utilisation selon l'une des revendications précédentes, **caractérisée en ce que** les pigments présentent une taille de grain moyenne de 0,15 à 100 µm et sont incorporés dans des glaçures céramiques, de l'engobe ou un produit vitreux, à raison de 1 à 35 % en poids, de préférence à raison de 3 à 25 % en poids, de façon plus préférée à raison de 5 à 20 % en poids, de façon particulièrement préférée à raison de 7 à 15 % en poids.

8. Utilisation selon l'une des revendications précédentes, **caractérisée en ce que** les pigments présentent une taille de grain moyenne au plus de 150 nm, de façon particulièrement préférée de 15 à 50 nm et sont incorporés dans les glaçures céramiques, de l'engobe ou des produits vitreux à raison de 0,1 à 15 % en poids, de préférence à raison de 0,3 à 10 % en poids, de façon plus préférée à raison de 0,5 à 8 % en poids, de façon particulièrement préférée à raison de 1 à 5 % en poids.

9. Procédé pour la fabrication de marquages, inscriptions et/ou décors, monochromes ou polychromes, dans de la céramique, de la faïence, du grès, de la poterie, de la porcelaine, des glaçures céramiques, de l'engobe, du verre ou des produits vitreux (émaux), dans lequel on incorpore comme pigments dans la matière des composés à base de phosphates métalliques et des mélanges, composés mixtes, sels mixtes ou produits d'addition qui contiennent de tels composés, et on irradie la matière au moyen d'une lumière laser.

10. Céramique, faïence, grès, poterie, porcelaine, glaçures céramiques, engobe, verre ou produits vitreux (émaux) porteurs de marquages, inscriptions et/ou décors, monochromes ou polychromes, produits conformément au procédé selon la revendication 9.
